# EUROPÄISCHE PATENTSCHRIFT

(11) **EP 0 351 571 B1**
(45) Veröffentlichungstag und Bekanntmachung des Hinweises auf die Patenterteilung: **08.06.1994**
(21) Anmeldenummer: 89111269.0
(22) Anmeldetag: 21.06.1989
(51) Int. Cl.: B65G 47/91, B65G 59/04, B65G 57/04

(54) **Vorrichtung zum Heben von Tray-Packungen**
Device for lifting tray-packages
Dispositif de préhension de groupes d'objets emballés

(30) Priorität: 16.07.1988 DE 3824155
(43) Veröffentlichungstag der Anmeldung: 24.01.1990
(73) Patentinhaber: Focke & Co. (GmbH & Co.), 27283 Verden (DE)
(72) Erfinder: Focke, Heinz, D-2810 Verden (DE); Holloch, Johannes, D-2815 Langwedel (DE)
(74) Vertreter: Bolte, Erich, Dipl.-Ing.

(56) Entgegenhaltungen:
- EP-A- 0 163 201
- DE-A- 1 756 327
- DE-A- 3 419 913
- FR-A- 2 579 190
- US-A- 4 753 564

## Beschreibung

Die Erfindung betrifft eine Vorrichtung zum Heben und Transportieren von Gegenständen, insbesondere von Tray-Packungen, mit einem unten offenen, heb- und senkbaren Saugkasten, der über den Gegenstand setzbar ist, um diesen durch Unterdruck im Saugkasten zu erfassen, wobei der Saugkasten mit einer horizontalen, oberen Tragplatte und mit beweglichen Seitenwänden versehen ist,
- die mittels Betätigungsorganen aus einer den Querschnitt des Saugkastens erweiternden Ausgangsposition in eine den Abmessungen des zu hebenden Gegenstandes entsprechende aufrechte Position bewegbar sind,
- die mit an der Tragplatte angebrachten Scharnierlagern an derselben schwenkbar gelagert sind,
- die mit an den Seitenflächen des Gegenstandes durch Unterdruck andrückbaren, elastischen Dichtungsstreifen versehen sind.

Eine solche Vorrichtung ist bekannt aus der FR-A-2579190. Seitenwände der Vorrichtung sind an einem obenliegenden Tragorgan befestigt und können durch Betätigungsorgane verschwenkt werden. Nachteilig ist hier, daß die Betätigungsorgane sich außerhalb der Kontur des oben liegenden Tragorgans befinden.

Ähnlich sind auch Vorrichtungen gemäß DE-A-3419913 und DE-A-1756337 aufgebaut. Bei diesen Vorrichtungen ragen Betätigungsorgane zum Verschwenken von Seitenwänden weit über oben liegende Tragorgane hinaus. Mit den oben genannten Vorrichtungen ist es daher nicht möglich Gegenstände, wie insbesondere Tray-Packungen, in enger Nachbarschaft zueinander auf z. B. Paletten zu stapeln.

Die US-A-4753564 und die EP-A-0163201 zeigen Vorrichtungen, bei denen die an einem oben liegenden Tragorgan schwenkbar angebrachten Seitenwände nicht mittels Betätigungsorganen verschwenkt werden können. Vielmehr werden die Seitenwände lediglich durch den Unterdruck an die zu hebenden Gegenstände angedrückt. Es ist demnach nicht möglich die Seitenwände zum leichteren Erfassen der zu hebenden Gegenstände in eine den Querschnitt erweiternde Position zu verschwenken.

Der Erfindung liegt die Aufgabe zugrunde, eine gattungsgemäße Vorrichtung derart weiterzuentwickeln, daß Gegenstände eng nebeneinander abgesetzt werden können.

Zur Lösung dieser Aufgabe ist die erfindungsgemäße Vorrichtung dadurch gekennzeichnet, daß die Scharnierlager und die Betätigungsorgane auf der Oberseite der Tragplatte innerhalb der Kontur derselben angebracht sind.

Erfindungsgemäß sind demnach die Scharnierlager für die Seitenwände auf der Oberseite der Tragplatte angeordnet, wobei diese zugleich den oberen Abschluß des Saugkastens darstellt. Auch die Betätigungsorgane, wie Betätigungszylinder etc., sind auf der Oberseite der Tragplatte angeordnet, und zwar innerhalb der Kontur derselben. Es ist somit möglich, die Gegenstände in enger Nachbarschaft zueinander z. B. auf Paletten abzusetzen.

Nach einem weiteren Vorschlag der Erfindung weisen die Seitenwände im Bereich der Oberseite der Tragplatte je eine aufrechte Anschlagwand auf. Die Betätigungsorgane sind Betätigungszylinder, die mit einer Kolbenstange auf die aufrechte Anschlagwand im Sinne einer schließenden Schwenkbewegung der Seitenwände einwirken. Zweckmäßig ist es, wenn die Seitenwände dabei durch ein Rückholorgan, insbesondere durch Rückholfedern, in Richtung auf die Spreizstellung (Öffnungsstellung) vorbelastet sind.

Weitere Merkmale der Erfindung betreffen die Ausbildung des Saugkastens, insbesondere hinsichtlich der Abdichtung.

Ein Ausführungsbeispiel der Erfindung wird nachfolgend anhand der Zeichnungen näher erläutert. Es zeigt:
- Fig. 1: eine Vorrichtung zum Heben einer Tray-Packung im Querschnitt als Teil einer Roboters,
- Fig. 2: ein Hubaggregat (Saugkasten) der Vorrichtung gemäß Fig. 1 als Einzelheit bei gespreizten Seitenwänden,
- Fig. 3: eine Darstellung entsprechend Fig. 2 in einer um 90° versetzten, quergerichteten Schnittebene, bei vertikal gerichteten Seitenwänden,
- Fig. 4: den Saugkasten der Vorrichtung in Unteransicht, und
- Fig. 5: den Saugkasten in Draufsicht.

Bei dem gezeigten Ausführungsbeispiel geht es um die Handhabung besonders kritischer Gegenstände, nämlich quaderförmiger Tray-Packungen 10. Diese bestehen üblicherweise aus einem Tray bzw. einem Bodenteil 11. Dieses besteht aus einer Bodenwand 12 und einem ringsherumlaufenden Seitenbord 13. Gegenstände, im vorliegenden Falle Keksrollen 14, stehen auf der Bodenwand 12 und werden durch das Seitenbord 13 seitlich umfaßt. Die verpackten Gegenstände, also die Keksrollen 14, ragen mit dem überwiegenden Teil über das Bodenteil 11 hinweg. Die so ausgebildete Tray-Packung 10 kann mit einer Folie umhüllt sein, ist jedoch üblicherweise offen, wie bei dem gezeigten Ausführungsbeispiel.

Die Tray-Packung 10 soll als Einheit transportiert, insbesondere gehoben und abgesetzt werden, z.B. auf einer Palette. Dieser Lade- bzw. Transportvorgang soll selbsttätig erfolgen, also ohne manuelle Eingriffe.

Zu diesem Zweck ist ein mit Saugluft beaufschlagbares Huborgan vorgesehen, nämlich ein Saugkaseten 15 zum Erfassen und Halten der Tray-Packung 10 während einer Hub- bzw. Transportbewegung. Der Saugkasten 15 ist zu diesem Zweck an einem Förderorgan angeordnet. Bei dem dargestellten Ausführungsbeispiel ist der Saugkasten 15 über eine aufrechte Tragstange 16 mit einem Ausleger bzw. Arm 17 eines Hubförderers, insbesondere eines Roboters, verbunden. Ein Beispiel für einen geeigneten Lade-Roboter ist in der DE-A-36 38 991 dargestellt und beschrieben.

Der Saugkasten 15 wird zum Erfassen der Tray-Packung 10 von oben her über diese gestülpt. Sodann wird innerhalb des Saugkastens 15 Unterdruck erzeugt, wodurch die Tray-Packung 10 im bzw. am Saugkasten 15 gehalten wird. Die Saugluft bzw. der Unterdruck wirkt dabei auf das Bodenteil 11, insbesondere auf die Bodenwand 12, und trägt diese samt Inhalt.

Der unten offene Saugkasten 15 besteht im vorliegenden Falle aus einer oberen Tragplatte 18. An dieser, nämlich an deren Oberseite, ist die Tragstange 16 angebracht. Des weiteren ist die Tragplatte 18 mit einem Sauganschluß versehen, nämlich einem Saugrohr 19, das über eine Öffnung 20 mit dem Inneren des Saugkastens 15 verbunden ist. Das Saugrohr 19 ist mit einer hier nicht gezeigten Unterdruckquelle verbunden, insbesondere mit einem Ventilator, der bei verhältnismäßig geringem Unterdruck große Luftmengen abzusaugen vermag.

Der Saugkasten 15 ist weiterhin mit seitlichen Dichtungen versehen, die in der Arbeits- bzw. Hubstellung des Saugkastens 15 infolge des Unterdrucks dichtend am Bodenteil 11 anliegen, nämlich an dessen Seitenbord 13. Bei dem vorliegenden Ausführungsbeispiel sind elastische Dichtungsstreifen 21 am unteren Rand von Seitenwänden 22 des Saugkastens 15 angebracht. Die Seitenwände 22 enden mit Abstand oberhalb des Bodenteils 11, während sich die elastisch verformbaren Dichtungsstreifen 21 bis zum Seitenbord 13 des Bodenteils 11 erstrecken. Durch Unterdruck innerhalb des Saugkastens 15 legen sich die Dichtungsstreifen 21 dichtend an das Seitenbord 13 an und übertragen damit zugleich Tragkraft auf das Bodenteil 11 infolge von Reibschluß.

Die Anzahl und Ausgestaltung der Seitenwände 22 ist an die Grundrißform des Saugkastens 15 angepaßt. Bei dem hier gezeigten rechteckigen Saugkasten 15 sind vier Seitenwände 22 einander paarweise gegenüberliegend angeordnet. Die Seitenwände 22 erstrecken sich bis zu aufrechten Eckkanten des Saugkastens 15. Im Bereich dieser Eckkanten sind aufrechte Dichtungen angeordnet, nämlich Dichtungsprofile 23 aus elastischem Werkstoff. Diese dienen zur Abdichtung von Eckspalten 24 im Bereich von aneinanderstoßenden benachbarten Seitenwänden 22.

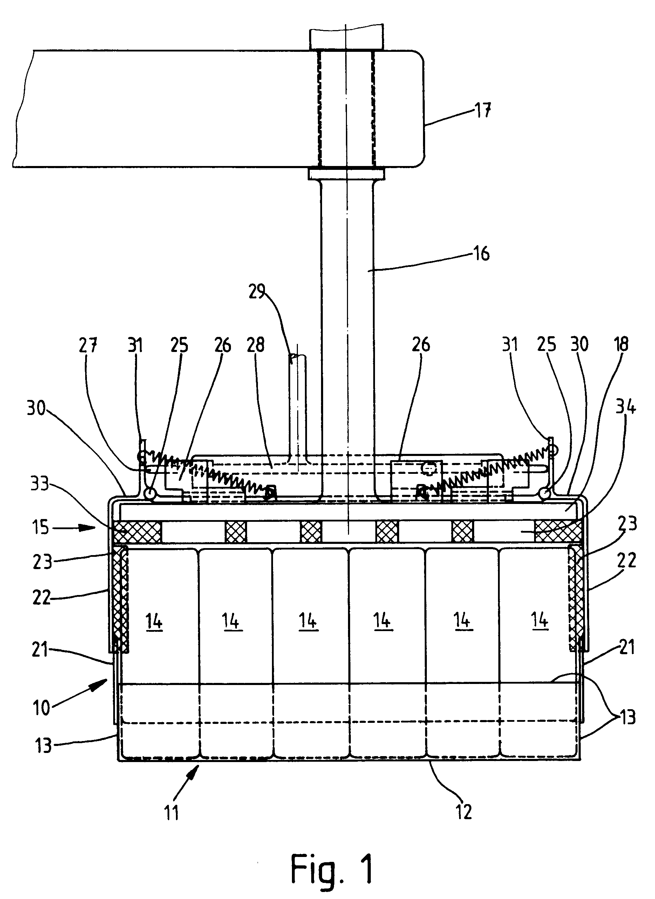

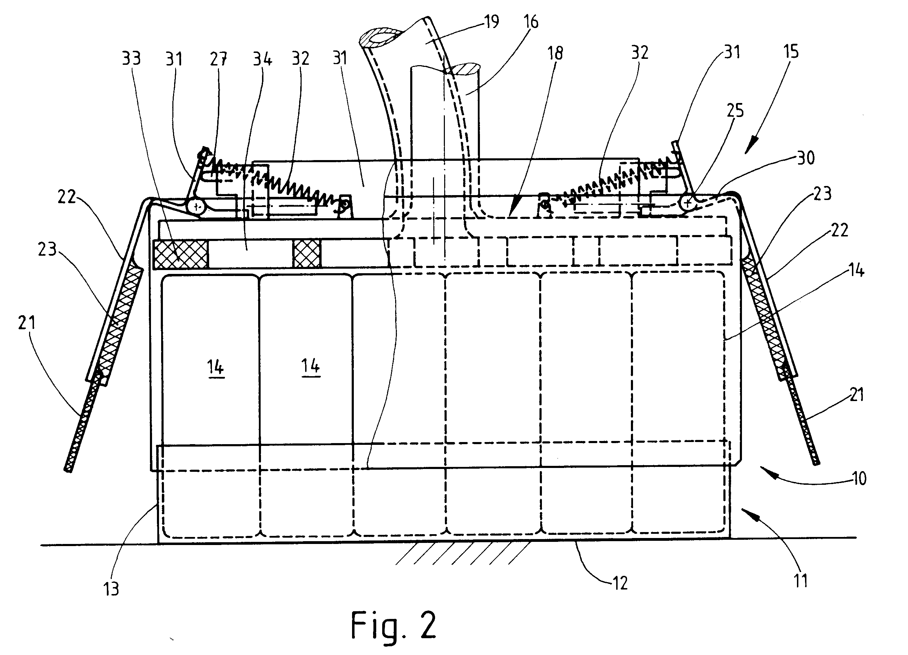

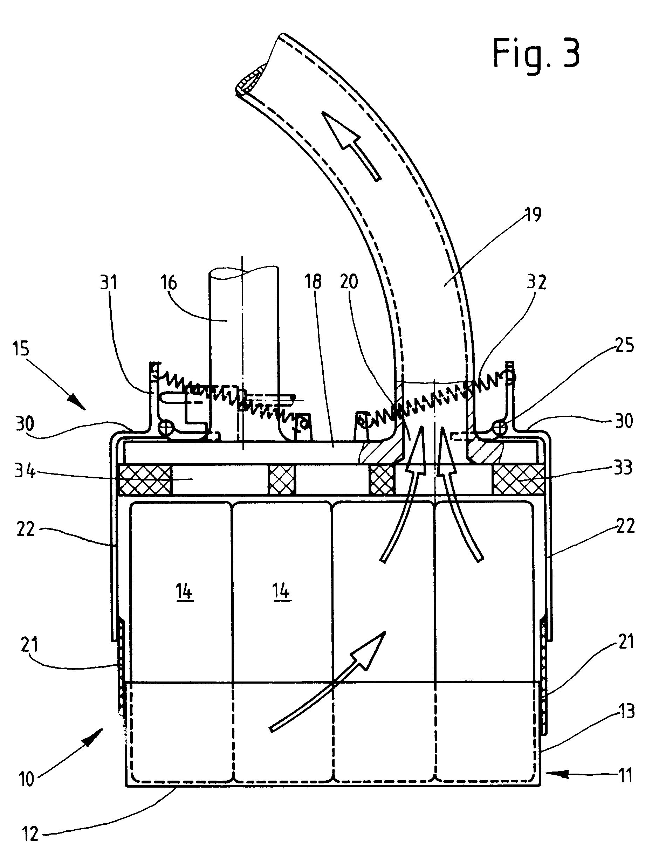

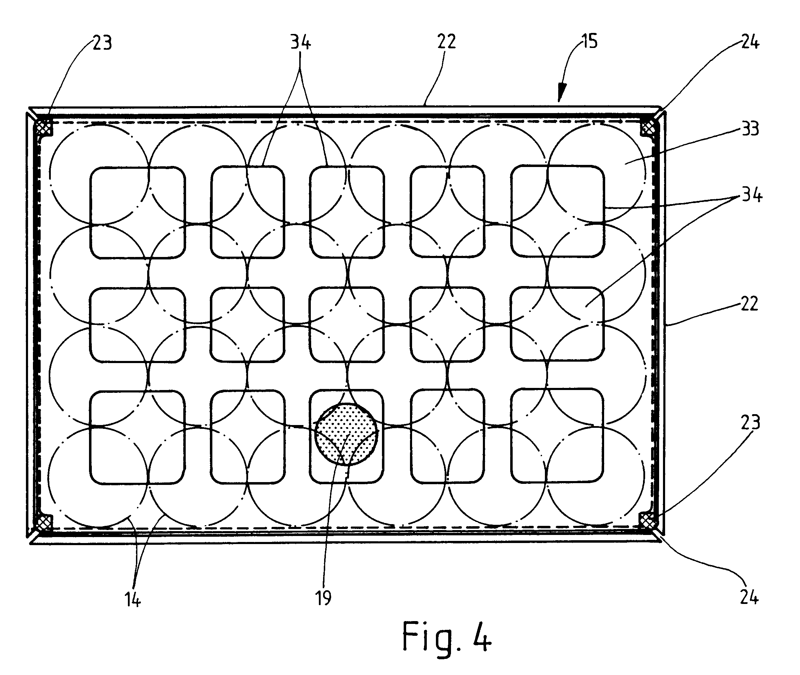

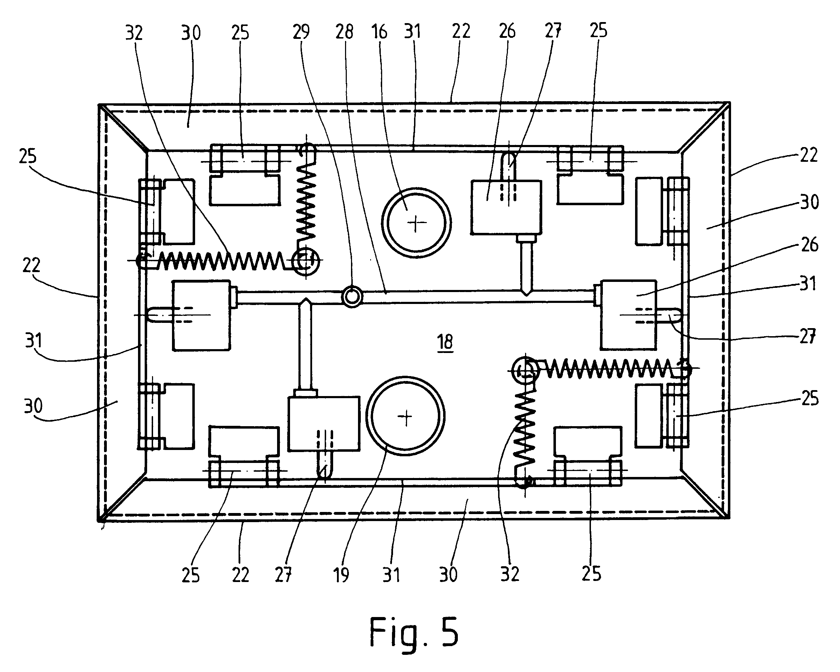

Zum Aufsetzen auf einen Gegenstand (Tray-Packung 10) wird der Saugkasten in eine nach unten divergierende, trichterförmige Gestalt gebracht. Zu diesem Zweck sind die (vier) Seitenwände 22 bewegbar, nänlich klappbar an der Tragplatte 18 angebracht. Jede Seitenwand 22 ist mit einem kantenparallel verlaufenden Scharnierlager 25 an der Tragplatte 18, nämlich auf deren Oberseite benachbart zum Rand gelagert. Die Seitenwände 22 sind um das zugeordnete Scharnierlager 25 schwenkbar, nämlich aus einer divergierenden Ausgangsstellung gemäß Fig. 2 in die Schließ- bzw. Tragstellung gemäß Fig. 1 sowie Fig. 3 bis 5.

Die Seitenwände 22 werden zur Durchführung der Schwenkbewegungen mit Betätigungsorganen beaufschlagt. Bei dem gezeigten Ausführungsbeispiel ist jeder Seitenwand 22 als Betätigungsorgan ein kleiner Betätigungszylinder 26 zugeordnet, der beispielsweise mit Druckluft beaufschlagt wird. Eine Kolbenstange 27 desselben wird zum Verschwenken der Seitenwand 22 aus der Schrägstellung in die aufrechte Schließstellung gegen einen Anschlag der Seitenwand 22 gefahren. Die den vier Seitenwänden 22 zugeordneten Betätigungszylinder 26 sind über ein System von Druckmittelleitungen 28 miteinander und über eine Hauptleitung 29 mit einem zentralen Druckluftaggregat (nicht gezeigt) verbunden.

Die Seitenwände 22 sind beim vorliegenden Ausführungsbeispiel im Querschnitt winkelförmig ausgebildet. Ein rechtwinklig an die Seitenwand 22 anschließender Schenkel 30 verläuft über die annährend volle Länge der Seitenwände 22 an der Oberseite der Tragplatte 18. In den Ecken sind die aneinanderstoßenden Schenkel 30 auf Gehrung geschnitten.

Jeder Schenkel 30 ist mit zwei im Abstand voneinander angeordneten Scharnierlagern 25 klappbar an der Oberseite der Tragplatte 18 gelagert. Zwischen den Scharnierlagern 25 befinden sich die Betätigungszylinder 26. diese bzw. deren Kolbenstangen 27 wirken auf eine aufrechte Anschlagwand 31 der Seitenwände 22. Die Anschlagwände 31 sind jeweils an den Schenkeln 30 angebracht, und zwar im rechten Winkel zu diesen. Bei dem gezeigten Ausführungsbeispiel erstreckt sich die Anschlagwand 31 jeweils im Bereich zwischen den Scharnierlagern 25 einer Seitenwand 22. Die Kolbenstangen 27 wirken mit Abstand vom Scharnierlager 25 auf die aufrechten bzw. schräggerichteten Anschlagwände 31 zum Verschwenken der Seitenwände 22.

Bei dem vorliegenden Ausführungsbeispiel bewirken die Betätigungszylinder 26 eine Verstellung der Seitenwände 22 in die aufrechte (Schließ-)Stellung. Die Rückkehr in die schräggerichtete bzw. divergierende Ausgangsstellung (Fig. 2) wird durch Rückholfedern 32 besorgt, die an jeder Seitenwand 22 bzw. an der Anschlagwand 31 derselben einerseits und an der Tragplatte 18 andererseits befestigt sind. Die Rückholfedern 32 sind in Richtung auf die divergierende Stellung der Seitenwände 22 vorgespannt.

An der Unterseite der Tragplatte 18, also dem Gegenstand (Tray-Packung 10) zugekehrt, ist bei dem gezeigten Beispiel eine elastische Auflage 33 angebracht. Diese besteht beispielweise aus elastischem Schaumstoff. Die Auflage 33 ist rasterförmig ausgebildet mit einer Vielzahl von Ausnehmungen 34. Durch eine dieser Ausnehmungen 34 kann Luft durch das Saugrohr 19 abgesaugt werden.

Zum Anheben von Gegenständen, z.B. Tray-Packungen 10, wird mit der beschriebenen Hubvorrichtung so vorgegangen, daß der Saugkasten 15 durch entsprechendes Betätigen eines Roboters oder dgl. bei gespreizten Seitenwänden 22 (Fig. 2) auf den Gegenstand abgesenkt wird. Vorzugsweise befindet sich die Tragplatte 18 bzw. die an dieser angebrachte Auflage 33 mit einem geringen Abstand oberhalb der Tray-Packung 10, so daß diese in der unteren Position des Saugkastens 15 von diesem nicht berührt wird. Die Seitenwände 22 werden nun in die aufrechte Position geschwenkt, wodurch die Dichtungsstreifen 21 Anlage am Seitenbord 13 erhalten. Durch Erzeugen von Unterdruck innerhalb des Saugkastens 15 werden die Dichtungsstreifen 21 an den Seitenbord 13 angedrückt. Durch die Wirkung des Unterdruckes im Saugkasten 15 und zusätzlich durch Reibkräfte zwischen Dichtungsstreifen 21 und Seitenbord 13 kann nunmehr die Tray-Packung 10 angehoben, transportiert und an der gewünschten Stelle abgesetzt werden. Beim Absetzen wird der Saugkasten 15 entlüftet. Die Seitenwände 22 werden in die Schrägstellung verschwenkt, so daß der Saugkasten 15 ohne Berührung der Tray-Packung 10 von dieser wieder abgehoben werden kann.

## Patentansprüche

1. Vorrichtung zum Heben und Transportieren von Gegenständen, insbesondere von Tray-Packungen (10), mit einem unten offenen, heb- und senkbaren Saugkasten (15), der über den Gegenstand (10) setzbar ist, um diesen durch Unterdruck im Saugkasten (15) zu erfassen, wobei der Saugkasten (15) mit einer horizontalen oberen Tragplatte (18) und mit beweglichen Seitenwänden (22) versehen ist,
- die mittels Betätigungsorganen (26) aus einer den Querschnitt des Saugkastens (15) erweiternden Ausgangsposition in eine den Abmessungen des zu hebenden Gegenstands (10) entsprechende aufrechte Position bewegbar sind,
- die mit an der Tragplatte (18) angebrachten Scharnierlagern (25) an derselben schwenkbar gelagert sind, und
- die mit an den Seitenfläche des Gegenstands (10) durch Unterdruck andrückbaren, elastischen Dichtungsstreifen (21) versehen sind,
**dadurch gekennzeichnet,** daß die Scharnierlager (25) und die Betätigungsorgane (26) auf der Oberseite der Tragplatte (18) innerhalb der Kontur derselben angebracht sind.

2. Vorrichtung nach Anspruch 1, dadurch gekennzeichnet, daß die Scharnierorgane (25) kantenparallel verlaufen und benachbart zu jedem Rand der Tragplatte (18) an deren Oberseite angeordnet sind.

3. Vorrichtung nach Anspruch 1 oder 2, dadurch gekennzeichnet, daß die Seitenwände (22) im Bereich der Oberseite der Tragplatte (18) je eine aufrechte Anschlagwand (21) aufweisen und, daß die Betätigungsorgane (26) Betätigungszylinder sind, die mit einer Kolbenstange (27) auf die aufrechten Anschlagwände (31) im Sinne einer schließenden Schwenkbewegung der Seitenwände (22) einwirken.

4. Vorrichtung nach Anspruch 3, dadurch gekennzeichnet, daß die Seitenwände (22) durch ein Rückholorgan, insbesondere durch Rückholfedern (32) in Richtung auf eine Spreizstellung (Öffnungsstellung) vorbelastet sind.

5. Vorrichtung nach einem oder mehreren der Ansprüche 1 bis 4, dadurch gekennzeichnet, daß der Saugkasten(15) Tragorgane umfaßt, nämlich eine Tragstange (16), ein Saugrohr (19) und Druckmittelleitungen (28, 29) für die Betätigungsorgane (26), wobei diese Tragorgane an der Oberseite der horizontalgerichteten Tragplatte (18) angeordnet sind, die wenigstens eine Öffnung (20) für den Anschluß des Saugrohrs (19) aufweist.

6. Vorrichtung nach einem oder mehreren der Ansprüche 1 bis 5, dadurch gekennzeichnet, daß an der Unterseite der Tragplatte (18) eine Polster-Auflage (33) aus elastischem Material angeordnet ist.

7. Vorrichtung nach einem oder mehreren der Ansprüche 1 bis 6, dadurch gekennzeichnet, daß die den Saugkasten (15) seitlich begrenzenden Seitenwände (22) bei vertikaler Stellung im Bereich von vertikalen Kanten durch ein aufrechtes Dichtungsprofil (23) abgedichtet sind.

8. Vorrichtung nach einem oder mehreren der Ansprüche 1 bis 7, dadurch gekennzeichnet, daß die Seitenwände (22) sich lediglich über einem Teil der Höhe des Gegenstandes (10) erstrecken, wobei die elastischen Dichtungsstreifen (21) im Bereich der unteren Kante der Seitenwände (22) an der Innenseite derselben angebracht sind und sich bis in den Bereich von Seitenborden (13) eines Trays erstrecken.

## Claims

1. Apparatus for raising and transporting articles, especially tray packs (10), with a raisable and lowerable suction box (15) which is open at the bottom and which can be placed over the article (10), in order to grasp the latter by means of a negative pressure in the suction box (15), the suction box (15) being provided with a horizontal upper carrier plate (18) and with movable side walls (22),
- which are movable by means of actuating members (26) out of an initial position widening the cross-section of the suction box (15) into an upright position corresponding to the dimensions of the article (10) to be raised,
- which are pivotably mounted on the carrier plate (18) by means of hinge bearings (25) attached to the latter, and
- which are provided with elastic sealing strips (21) which can be pressed by means of negative pressure against the side face of the article (10),
characterized in that the hinge bearings (25) and the actuating members (26) are mounted on the top side of the carrier plate (18) within the contour of the latter.

2. Apparatus according to Claim 1, characterized in that the hinge members (25) extend edge parallel and are arranged on the top side of the carrier plate (18) adjacently to each edge of the latter.

3. Apparatus according to Claim 1 or 2, characterized in that the side walls (22) each have an upright stop wall (21) in the region of the top side of the carrier plate (18), and in that the actuating members (26) are actuating cylinders which act by means of a piston rod (27) on the upright stop walls (31) with the effect of a closing pivoting movement of the side walls (22).

4. Apparatus according to Claim 3, characterized in that the side walls (22) are preloaded in the direction of a spreading position (opening position) by a return member, especially by return springs (32).

5. Apparatus according to one or more of Claims 1 to 4, characterized in that the suction box (15) comprises carrier members, namely a carrier rod (16), a suction pipe (19) and pressure-medium conduits (28, 29) for the actuating members (26), these carrier members being arranged on the top side of the horizontally directed carrier plate (18) which has at least one orifice (20) for the connection of the suction pipe (19).

6. Apparatus according to one or more of Claims 1 to 5, characterized in that a padded coating (33) made of elastic material is arranged on the underside of the carrier plate (18).

7. Apparatus according to one or more of Claims 1 to 6, characterized in that, in a vertical position, the side walls (22) laterally limiting the suction box (15) are sealed off in the region of vertical edges by means of an upright sealing profile (23).

8. Apparatus according to one or more of Claims 1 to 7, characterized in that the side walls (22) extend only over some of the height of the article (10), elastic sealing strips (21) being attached to the inside of the side walls (22) in the region of the lower edge of the latter and extending into the region of side rims (13) of a tray.

## Revendications

1. Dispositif de levage et de transport d'objets, en particulier d'emballages de type plateau (10) avec caisson aspirant (15) ouvert par en dessous, levable et abaissable, susceptible d'être placé sur l'objet (10), pour le saisir par action du vide dans le caisson aspirant (15), le caisson aspirant (15) étant pourvu d'une plaque support supérieure (18) horizontale et de parois latérales (22) mobiles,
- qui sont déplaçables au moyen d'organes d'actionnement (26) d'une position de sortie agrandissant la section transversale du caisson aspirant (15) à une position relevée correspondant aux dimensions de l'objet (10) à lever,
- qui, avec des paliers charnières (25) montés sur la plaque support (18) sont orientés pivotants sur celles-ci, et
- qui sont pourvues de bandes d'étanchéité (21) élastiques, susceptibles de pouvoir être pressées sur la face latérale de l'objet (10) par l'action du vide,
caractérisé en ce que les paliers charnières (25) et les organes d'actionnement (26) sont montés sur la face supérieure de la plaque support (18) à l'intérieur de son contour.

2. Dispositif selon la revendication 1, caractérisé en ce que les organes charnières (25) s'étendent parallèlement au bord et sont disposés au voisinage de chaque bord de la plaque support (18), sur sa face supérieure.

3. Dispositif selon la revendication 1 ou 2, caractérisé en ce que les parois latérales (22) présentent chacune dans la zone de la face supérieure de la plaque support (18) une paroi de butée (21) verticale, et en ce que les organes d'actionnement (26) sont des vérins agissant, par une tige de piston (27), sur les parois de butée (31) verticales, dans le sens d'un mouvement de pivotement refermant les parois latérales (22).

4. Dispositif selon la revendication 3, caractérisé en ce que les parois latérales (22) sont pré-sollicitées en direction d'une position d'écartement (position d'ouverture) au moyen d'un organe de rappel, en particulier au moyen de ressort de rappel (32).

5. Dispositif selon l'une ou plusieurs des revendications 1 à 4, caractérisé en ce que le caisson aspirant (15) comprend des organes supports, notamment une tige support (16), un tube aspirant (19) et des conduites de fluide sous pression (28, 29) destinés aux organes d'actionnement (26), ces organes supports étant disposés en face supérieure de la plaque support (18), orientée horizontalement et présentant au moins une ouverture (20) pour le raccordement du tube d'aspiration (19).

6. Dispositif selon l'une ou plusieurs des revendications 1 à 5, caractérisé en ce qu'une embase rembourrée (33) en matériau élastique est disposée en face inférieure de la plaque support (18).

7. Dispositif selon l'une ou plusieurs des revendications 1 à 6, caractérisé en ce que les parois latérales (22) délimitant latéralement le caisson aspirant (15) sont isolées de façon étanche en position verticale, dans la zone d'arête verticale, au moyen d'un profilé d'étanchéité (23) vertical.

8. Dispositif selon l'une ou plusieurs des revendications 1 à 7, caractérisé en ce que les parois latérales (22) s'étendent seulement sur une partie de la hauteur de l'objet (10), les bandes d'étanchéité élastiques (21) étant montées dans la zone du bord inférieur des parois latérales (22), sur sa face intérieure, et s'étendant jusque dans la zone des bords latéraux (13) d'un plateau.
